Europäisches Patentamt

European Patent Office

Office européen des brevets

(11) Numéro de publication: **0 035 953**
**B1**

(12) **FASCICULE DE BREVET EUROPEEN**

(45) Date de publication du fascicule du brevet: **19.06.85**

(21) Numéro de dépôt: **81420031.7**

(22) Date de dépôt: **05.03.81**

(51) Int. Cl.⁴: **A 01 G 1/00,** A 01 C 1/04

(54) **Tapis de gazon et son procédé de fabrication.**

(30) Priorité: **11.03.80 FR 8005370**

(43) Date de publication de la demande:
**16.09.81 Bulletin 81/37**

(45) Mention de la délivrance du brevet:
**19.06.85 Bulletin 85/25**

(84) Etats contractants désignés:
**AT BE CH DE FR GB IT LI NL SE**

(56) Documents cités:

**Néant**

(73) Titulaire: **FITEXA S.A. (Société Anonyme)**
**25, Quai Paul Doumer**
**F-92400 Courbevoie (FR)**

(72) Inventeur: **Baron, Gérard**
**1, rue Charcot**
**F-92800 Puteaux (FR)**

(74) Mandataire: **Laurent, Michel et al**
**Bureaux Chalin A1 20, rue Louis Chirpaz Boîte**
**Postale 32**
**F-69131 Lyon-Ecully (FR)**

EP 0 035 953 B1

Courier Press, Leamington Spa, England.

## Description

L'invention concerne un tapis destiné à la production de gazon de placage ou similaire.

Comme on le sait, un "gazon de placage" se présente sous la forme d'un tapis que l'on déroule sur un sol préparé pour le recevoir.

Depuis plusieurs années, on a proposé de réaliser des tapis présemés incorporant des semences dans des nappes en papier, en paille, en déchets textiles, en mousse de polyéruthane, assemblées par collage, cardage, aiguilletage ou autres. On réalise ainsi des semis de gazon régulier protégés contre les prédateurs et les intempéries. Toutefois, ces tapis posés sur le sol se desséchant rapidement et conduisent souvent à une germination irrégulière. Pour pallier à cet inconvénient, on a suggéré de recouvrir le tapis de sable ou de terre, ce que occasionne un travail fastidieux et coûteux. En outra, dans certains cas, l'emploi de fibres telles que cells en fibranne de cellulose empêche la germination des semences, et dans d'autre cas, l'emploi d'autres fibres non dégradables ou trop résistantes mécaniquement entraîne l'arrachment par des crampons ou pointes de chaussures de sport (voir par exemple brevets américains 22.192,939, 2.826.865, 2.923.093 et 2.976.646).

On a maintenant trouvé un tapis favorable à la germination des graines de gazon ou similaires et au développement de celles-ci, qui évite les divers inconvénients mentionnés ci-dessus.

Ce tapis de gazon de placage selon l'invention est constitué de deux nappes non-tissées de fibres textiles entre lesquelles est disposée une couche de graines de gazon ou similaire, les fibres d'une nappe étant des fibres synthétiques, et l'ensemble des deux nappes étant aiguillette, ce tapis, se caractérisant en ce que les fibres de l'autre nappe non-tissée sont principalement des fibres de lin, et en ce que du fait de l'aiguilletage les fibres de line et les fibres synthétiques s'interpénètrent.

Dans la description et les revendications, par "tapis de gazon", i faut entendre aussi bien un tapis potentiel de gazon, c'est-à-dire un tapis dans lequel les graines de gazon ou similaire sont disposées dans des conditions propices à leur germination, qu'un tapis à la surface duquel le gazon s'est développée.

De même, par "gazon", il faut entendre non seulement le gazon proprement dit, mais aussi tout terrain garni d'herbes, que celles-ci servent à des fins ornementales et/ou pour l'alimentation du bétail. On peut citer comme graines le ray-grass et ses mélanges, la luzerne, le dichondra, etc. . .

Les fibres de lin sont obtenues par cardage d'étoupe de lin. Leur longueur moyenne est de préférence comprise entre 0,5 et 10 cm et avantageusement entre 2 et 5 cm. Elles sont réunies en une nappe non-tissée ou un mat aiguilleté par la suite. Une nappe destinée a être placée en position inférieure a de préférence un poids compris entre 100 et 400 g/m2 et une nappe destinée à occuper une position supérieure a un poids compris entre 100 et 300 g/m2. Ces positions (inférieure ou supérieure) sont évidemment désignées en fonction de la position du tapis sur le sol à engazonner.

Les nappes de base (inférieure ou supérieure) reçoivent avantageusement un léger aiguilletage afin d'en faciliter deur manipulation.

Il est également possible d'introduire une certaine proportion—jusqu'à 50% en poids—de fibres d'autres natures dans une nappe à base de fibres de lin.

Comme fibres de lin, ou peut utiliser certes des fibres usuelles et nobles. Toutefois, pour diminuer le coût, on peut faire avantageusement appel à des déchets de fibres de lin ayant subi le rouissage ou à des fibres de lin courtes qui ne pourraient être utilisées valablement en filature traditionelle.

Parmi les matières qui peuvent être utilisées, comme fibres synthétiques, on peut citer les polyesters qui peuvent être photodégradables, le polypropylène, les polyamides, ou les fibres obtenues par fibrillation de films. On emploie avantageusement parmi ces matériaux de la grisaille, c'est-à-dire des fibres qui constituent des déchets de différentes opérations de l'industrie textile. On peut utiliser par exemple une nappe de grisaille d'un poids allant de 100 à 300 g/m2 lorsqu'elle est en position inférieure et de 100 à 200 g/m2 lorsqu'elle est en position supérieure. Les fibres ont alors une longueur de l'ordre de celle du lin. La nappe à base de lin est de préférence en position inférieure, c'est-à-dire au contact du sol.

Entre les deux nappes non tissées, les graines sont réparties de façon homogène à raison de 5 à 50 g/m2 en fonction des résultats recherchés et surtout en fonction des compositions de mélange par exemple de 7 à 10 g/m2 avec du paturin et 30 à 45 g/m2 avec du ray-grass.

En pratique, on dépose ces graines mécaniquement sur le nappe inférieure, soit à l'aide d'un semoir ou par tout autre moyen équivalent.

L'ensemble ainsi formé de deux nappes et d'une couche intermédiaire de graines est aiguilleté, c'est-à-dire que certaines fibres de l'une des nappes ont été tirées, à l'aide d'un aiguille à barbes, enfoncées, puis retirées perpendiculairement au plan général du tapis, à travers la couche intermédiaire et au moins une partie de l'épaisseur de l'autre nappe. Cette couche intermédiaire se trouve ainsi emprisonnée et fixée entre les nappes. L'épaisseur totale du tapis grâce à un pliage exercé au cours de la fabrication est de préférenee de l'ordre de 0,5 à 2 cm.

Le tapis à base de lin et de fibres synthétiques ainsi préparé présente différents avantages, parmi lesquels celui de former un substrat résistant à la traction lors des manipulations du tapis, celui de se dégrader en un temps suffisamment long pour garder sa cohésion pendant la pousse initiale du gazon, celui de ne libérer lors de sa décomposition que des substances fertilisantes et/ou non toxiques pour les jeunes plantes et celui de retenir une quantité d'eau propice à la germination même sur un terrain en pente.

La préparation de ce tapis se fait de préférence à l'aide de deux cardes séparées qui défibrillent et répartissent, éventuellement à l'aide d'un autre moyen connu, les fibres sur les deux tapis mobiles d'un nappeur. Chacune de ces nappes est pliée plusieurs fois sur ellemême pour atteindre l'épaisseur désirée de chaque nappe. Les graines sont réparties de façon homoge6ne sur toute la surface supérieure de la nappe inférieure, la nappe supérieure est appliquée sur la couche intermédiaire ainsi disposée, puis un aiguilletage est effectué à travers l'épaisseur de cet ensemble à raison de 20 à 50 piqûres par centimètre carré.

Ce tapis que renferme les graines peut être déposé directement sur la plateforme de culture, préalablement aplanie et rendue étanche. Une fois la pose effectuée, on apporte l'eau et les éléments nutritifs nécessaires au développement des plantes. Pour ce faire, utilise de préférence, pour partie des arrosages, de l'engrais liquide. La quantité d'eau est telle que le tapis reste humide mais sans exce6s lorsqu'il est déposé sur un terrain légèrement incliné, le ruissellement étant alors évité.

Un tel tapis de placage présente de nombreux avantages parmi lesquels on peut citer son poids initial à sec qui est de l'ordre de 600 g/m2. Cela, joint à la tenue à la traction et au pliage et au fait que les graines sont maintenues entre les deux nappes, rend sont enroulement, son transport et sa pose spécialement faciles, sans précautions particulières. Il peut être posé même sur des talus ou d'autres surfaces en forte pente. L'isolement thermique au niveau des graines en germination est tel que des conditions favorables au développement de la plantule sont créées et tempèrent l'effet des conditions extérieures. La rétention de l'eau favorise également le décomposition lente et régulière du lin.

On peut obtenir à partie de ce tapis le développement du gazon hors de tout contact avec de l'humus ou de la terre (culture hydroponique). Le tapis renfermant les graines est déposé sur une feuille mince étanche notamment de polyéthylène ou tout autre système d'étanchéité lui-même étendue sur un sol unit préparé a6 cet effet. Un arrosage avec de l'eau et périodiquement de l'engrais est pratiqué de façon à maintenir constamment de l'humidité dans le tapis et en évitant le ruissellement qui entraîne une perte de matière nutritive. Cette périodicité de l'arrosage dépend évidemment des conditions atmosphériques. Un apport de 5 à 30 g de matières nutritives compté à l'état sec par mère carré et par mois est souhaitable. Avec une température et un éclairement satisfaisant, la germination commence au bout de quelques jours. Une tonte peut être effectuée après 4 à 5 semaines et le tapis commercialisé 6 à 8 semaines après le premier arrosage. Son poids est alors de 5 à 8 kg/m2. Il peut être roulé et découpé aux dimensions voulues, la séparation de la feuille de plastique après ou avant l'enroulement est très facile. Déposé sur un sol fertile, le gazon, même après plusieurs jours de stockage ou transport, continue régulièrement sa croissance.

## Revendications

1. Tapis de gazon de placage ou similaire, du type constitué par deux nappes de fibres textiles non tissées, comportant entre elles une couche de graines, les fibres de l'une des nappes étant des fibres synthétiques et l'ensemble des deux nappes étant aiguilleté caractérise en ce que les fibres de l'autre nappe non tissée sont principalement des fibres de lin, et en ce que du fait de l'aiguilletage, les fibres synthétiques et des fibres de lin s'interpénètrent.

2. Tapis selon la revendication 1 caractérisé en ce que la nappe de dessus est entièrement réalisée en fibres synthétiques.

3. Tapis selon la revendication 1, caractérisé en ce que la nappe support de base comporte principalement des fibres de lin.

4. Tapis selon l'une des revendications 1 à 3, caractérisé en ce que les fibres synthétiques sont en polypropylène.

5. Tapis selon l'une des revendications 1 à 4, caractérisé en ce qu'il contient des graines non germées de gazon.

## Patentansprüche

1. Matte für Rasenabdeckung oder ähnliches, die aus zwei Bahnen aus Textilfaservlies gebildet ist, zwischen denen sich eine Lage Samenkörner befindet, wobei die eine der Bahnen aus Chemiefasern besteht und die beiden Bahnen miteinander vernadelt sind, dadurch gekennzeichnet, daß die Fasern der anderen Vliesbahn hauptsächlich Flachsfasern sind und daß infolge der Vernadelung die Chemiefasern und die Flachsfasern einander durchdringen.

2. Matte nach Anspruch 1, dadurch gekennzeichnet, daß die obere Bahn vollständig aus Chemiefasern hergestellt ist.

3. Matte nach Anspruch 1, dadurch gekennzeichnet, daß die die Basis bildende Trägerbahn hauptsächlich Flachsfasern enthält.

4. Matte nach einem der Ansprüche 1 bis 3, dadurch gekennzeichnet, daß die Chemiefasern aus Polypropylen bestehen.

5. Matte nach einem der Ansprüche 1 bis 4, dadurch gekennzeichnet, daß die ungekeimte Rasen-Samenkörner enthält.

## Claims

1. Pre-grown turf or the like, consisting in two cloth non-woven layers of textile fibers comprising between them a layer of grass seeds, the fibers of one of the said textile cloth being of synthetic fibers and the whole being tufted, characterized by the fact that the fibers of the other textile non-woven cloth being substantially flax fibers, and by the fact that consequently to the tufting synthetic fibers and flax fibers are interpenetrating.

2. Pre-grown turf according to claim 1, wherein the upper non-woven cloth is wholly made from synthetic fibers.

3. Pre-grown turf according to claim 1, wherein the lower supporting non-woven cloth is substantially made from flax fibers.

4. Pre-grown turf according to any claim 1 to 3, wherein the synthetic fibers are polypropylen fibers.

5. Pre-grown turf according to any claim 1 to 4, wherein the grass seeds are pre-germinated.